# EUROPEAN PATENT APPLICATION

(11) **EP 4 841 683 A2**
(43) Date of publication of application: **18.11.2026**
(21) Application number: 26176889.9
(22) Date of filing: 06.05.2026
(51) Int. Cl.: H01M 4/04, H01M 10/0525, H01M 4/02

(54) **ELECTRODE FOR LITHIUM SECONDARY BATTERY, METHOD FOR PREPARING THE SAME AND LITHIUM SECONDARY BATTERY INCLUDING THE SAME**

(30) Priority: 16.05.2025 KR 20250064116
(71) Applicant: SK On Co., Ltd., Seoul 03161 (KR)
(72) Inventor: DO, Young Hoon, 34124 Daejeon (KR); KIM, Eun Bi, 34124 Daejeon (KR)
(74) Representative: Prüfer & Partner mbB Patentanwälte · Rechtsanwälte

(57) **Abstract**

An electrode for a lithium secondary battery according to embodiments of the present disclosure includes an active material layer including a single-particle active material, wherein the single-particle active material satisfies Equation 1 below: [Equation 1] $0.8 \leq {D}_{B} - {D}_{A} \leq 2.6$ wherein in Equation 1, D_{A} denotes the average particle diameter of the single-particle active material measured from a scanning electron microscope (SEM) image, wherein the average particle diameter is the average value of the maximum diameters passing through centers of the active materials in the SEM image that are 0.5 µm or more, and D_{B} denotes the modal particle diameter of the single-particle active material measured from a particle size distribution (PSD) in which an x-axis represents particle size and a y-axis represents volume %, wherein the modal particle diameter is the particle diameter that exhibits a maximum peak in a particle size range of 20 µm or less.

## Description

### [BACKGROUND OF THE INVENTION]

### 1. Field of the Invention

The disclosure of this application relates to an electrode for a lithium secondary battery, a method for preparing the same, and a lithium secondary battery including the electrode.

### 2. Description of the Related Art

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, battery packs including the secondary battery have also been developed and applied to eco-friendly automobiles such as electric vehicles and hybrid vehicles as their power sources.

Examples of the secondary batteries may include a lithium secondary battery, a nickelcadmium battery, a nickel-hydrogen battery and the like. Among these, the lithium secondary battery has been actively developed and applied due to its high operating voltage, high energy density per unit weight, and advantages in charging speed and weight reduction, such that research and development thereof is progressing in this regard.

As the application range of lithium secondary batteries expands, longer cycle life, higher capacity, and improved operating stability are required. In this regard, research and development on cathode active materials for lithium secondary batteries are actively progressing.

### [SUMMARY OF THE INVENTION]

An object of the present disclosure is to provide an electrode for a lithium secondary battery having improved output characteristics and storage characteristics.

Another object of the present disclosure is to provide a lithium secondary battery having improved output characteristics and storage characteristics.

Yet another object of the present disclosure is to provide a method for preparing an electrode for a lithium secondary battery having improved output characteristics and storage characteristics.

An electrode for a lithium secondary battery according to embodiments of the present disclosure includes an active material layer including an active material in the form of single particles ("single-particle active material"), wherein the single-particle active material may satisfy Equation 1 below. [Equation 1] $0.8 \leq {D}_{B} - {D}_{A} \leq 2.6$

In Equation 1, D_{A} denotes the average particle diameter of the single-particle active material measured from a scanning electron microscope (SEM) image, wherein the average particle diameter is the average value of the maximum diameters passing through centers of the active materials in the SEM image that are 0.5 µm or more, and D_{B} denotes the modal particle diameter of the single-particle active material measured from a particle size distribution (PSD) in which an x-axis represents particle size and a y-axis represents volume %, wherein the modal particle diameter is the particle diameter that exhibits a maximum peak in a particle size range of 20 µm or less.

In one embodiment, the average particle diameter (D_{A}) and the modal particle diameter (D_{B}) in Equation 1 may be based on values measured from the active materials included in the active material layer of the electrode prepared by a press process or a roll-pressing process.

In one embodiment, the average particle diameter (D_{A}) may be measured from a scanning electron microscope (SEM) image taken of the cross-section after vertically cutting the active material layer, and the modal particle diameter (D_{B}) may be measured from a particle size distribution of the active materials obtained by immersing the active material layer in an organic solvent to obtain an organic solvent in which the active materials are dispersed, followed by extraction and drying.

In one embodiment, the average particle diameter (D_{A}) of the single-particle active material may be 1.2 µm to 2.4 µm.

In one embodiment, the modal particle diameter (D_{B}) of the single-particle active material may be 2.2 µm to 4.2 µm.

In one embodiment, the active material included in the active material layer may be composed only of the single-particle active material.

In one embodiment, the electrode may have an electrode density of 3.0 g/cc to 3.9 g/cc.

In one embodiment, the electrode may have an electrode density of 3.5 g/cc to 3.7 g/cc.

In one embodiment, the electrode may further include a current collector, wherein the active material layer is located on one or both surfaces of the current collector.

In one embodiment, the active material layer may have a thickness of 125 µm to 160 µm.

In one embodiment, the electrode is a cathode.

A lithium secondary battery according to embodiments of the present disclosure includes: a cathode, and an anode located opposite the cathode, wherein the cathode may be the above-described electrode for a lithium secondary battery.

A method for preparing an electrode for a lithium secondary battery according to embodiments of the present disclosure includes: applying and drying an electrode active material slurry; and pressing the dried electrode active material slurry by a roll press to form an active material layer including a single-particle active material, wherein a press gap between an upper roller and a lower roller of the roll press is 130 µm to 160 µm, and the single-particle active material included in the active material layer may satisfy Equation 1 below. [Equation 1] $0.8 \leq {D}_{B} - {D}_{A} \leq 2.6$

In Equation 1, D_{A} denotes the average particle diameter of the single-particle active material measured from a scanning electron microscope (SEM) image, wherein the average particle diameter is the average value of the maximum diameters passing through centers of the active materials in the SEM image that are 0.5 µm or more, and D_{B} denotes the modal particle diameter of the single-particle active material measured from a particle size distribution (PSD) in which an x-axis represents particle size and a y-axis represents volume %, wherein the modal particle diameter is the particle diameter that exhibits a maximum peak in a particle size range of 20 µm or less.

In one embodiment, the electrode active material slurry may be applied to one or both surfaces of a current collector with a loading amount of 15 mg/cm² to 30 mg/cm² and dried.

In one embodiment, the press gap between the upper roller and the lower roller of the roll press may be 135 µm to 158 µm.

The electrode for a lithium secondary battery according to embodiments of the present disclosure may achieve improved electrical conductivity and a reduced capacity degradation rate.

The lithium secondary battery according to embodiments of the present disclosure may achieve improved output characteristics and high-temperature storage characteristics.

The method for preparing an electrode for a lithium secondary battery according to embodiments of the present disclosure may provide the above-described electrode for a lithium secondary battery.

The electrode for a lithium secondary battery and the lithium secondary battery including the same according to the present disclosure may be widely applied in green technology fields including electric vehicles, battery charging stations, and renewable energy systems using batteries, such as photovoltaics and wind power generation. The electrode for a lithium secondary battery and the lithium secondary battery including the same according to the present disclosure may be used in eco-friendly electric vehicles and hybrid vehicles to suppress air pollution and greenhouse gas emissions, thereby contributing to mitigating climate change.

### [BRIEF DESCRIPTION OF THE DRAWINGS]

The above and other objects, features and advantages of the present disclosure will be more clearly understood from the following detailed description taken in conjunction with the accompanying drawings, in which:
FIG. 1 is an SEM image of a cross-section of an active material layer of an electrode prepared in Example 1;
FIG. 2 is a graph illustrating a particle size distribution of active materials included in the active material layer of the electrode prepared in Example 1;
FIG. 3 is a schematic plan view of a lithium secondary battery according to exemplary embodiments;
FIG. 4 is a schematic cross-sectional view of the lithium secondary battery according to exemplary embodiments; and
FIG. 5 is a schematic process flowchart for describing a method for preparing an electrode for a lithium secondary battery according to exemplary embodiments.

### [DETAILED DESCRIPTION OF THE INVENTION]

Hereinafter, embodiments of the present disclosure will be described in more detail with reference to the accompanying drawings. In this case, the same reference numerals are used for the same components in the drawings, and redundant descriptions of the same components will be omitted.

In addition, the embodiments described below may be understood independently of each other, but are not limited thereto, and embodiments formed by combining at least two or more of the embodiments described below should also be understood to fall within the technical spirit and scope of the present disclosure.

As used herein, the terms "on" and "disposed on" include not only cases in which one element is directly disposed on another element, but also cases in which one or more intervening elements are interposed therebetween.

Terms such as "first," "second," "below," "lower," "above," and "upper" are used in a relative sense to distinguish different components or positions, and do not designate absolute positions or orders.

### <Electrode for Lithium Secondary Battery>

An electrode for a lithium secondary battery according to embodiments of the present disclosure includes an active material layer including an active material in the form of single particles ("single-particle active material"), wherein the single-particle active material satisfies Equation 1 below: [Equation 1] $0.8 \leq {D}_{B} - {D}_{A} \leq 2.6$

In Equation 1, D_{A} denotes the average particle diameter (D_{A}) of the single-particle active material measured from a scanning electron microscope (SEM) image, wherein the average particle diameter (D_{A}) is the average value of the maximum diameters passing through centers of the active materials in the SEM image that are 0.5 µm or more, and D_{B} denotes the modal particle diameter (D_{B}) of the single-particle active material measured from a particle size distribution (PSD) in which an x-axis represents particle size and a y-axis represents volume %, wherein the modal particle diameter (D_{B}) is the particle diameter that exhibits a maximum peak in a particle size range of 20 µm or less.

The average particle diameter (D_{A}) and the modal particle diameter (D_{B}) are based on values measured from the active materials included in the active material layer of the electrode prepared by a press process or a roll-pressing process.

That is, the average particle diameter (D_{A}) and the modal particle diameter (D_{B}) are not based on values measured from the active materials included in the electrode active material slurry for forming the active material layer.

The size or shape of the active material included in the electrode active material slurry (hereinafter, also abbreviated as "preliminary active material") may be deformed by processes such as pressing during the manufacturing process of the electrode. Accordingly, when only the size or shape of the preliminary active material is controlled, the required output characteristics and storage characteristics of the prepared electrode may not be stably and uniformly achieved.

The electrode for a lithium secondary battery according to exemplary embodiments of the present disclosure may have the average particle diameter (D_{A}) and the modal particle diameter (D_{B}) of the active material included in the active material layer of the prepared electrode that satisfy Equation 1 described above, thereby exhibiting improved output characteristics and storage characteristics, and enhanced reliability.

The average particle diameter (D_{A}) may be measured, for example, as follows.

After vertically cutting the above-described electrode for a lithium secondary battery in a thickness direction, an SEM cross-sectional image may be captured at a magnification of 5,000x on a cross-sectional surface of the active material layer. The SEM image may be captured such that the total number of active materials included in the image is 50 or more. For example, the total number of active materials included in the SEM image may be 50 to 150. Using image processing software (Image-J), the maximum diameters for all cross-sections of the active materials present in the SEM image may be calculated. The maximum diameter corresponds to the length of the longest straight line among the straight lines extending from the center of each active material to the outermost edge. The average value of the obtained maximum diameters that are 0.5 µm or more is defined as the average particle diameter (D_{A}).

The modal particle diameter (D_{B}) may be measured, for example, as follows.

The above-described electrode for a lithium secondary battery may be prepared as a specimen having a predetermined size, for example, with dimensions of 1 mm × 1 mm × 150 µm in width (x), length (y), and thickness (z). The specimen may be immersed in an organic solvent, for example, N-methyl-2-pyrrolidone (NMP), and sonication may be performed under room temperature conditions. The solids of the active material layer may be separated from the sonicated specimen, and the separated solids may be immersed in the organic solvent, for example, NMP, and sonication may be performed again under room temperature conditions to obtain a dispersion. The sonication is sufficient if it allows the active materials to be dispersed within the dispersion, and it may be performed for, for example, 2 hours or more, but is not limited thereto. The active materials may be extracted from the dispersion by filtration and dried to obtain active materials from which moisture has been removed. The drying may be carried out, for example, in a vacuum oven, and it is sufficient to carry out the drying to the extent that moisture can be removed, for example, for 24 hours. A particle size distribution may be obtained by performing particle size analysis on the obtained active materials using a particle size analyzer. The particle size distribution may be a particle size distribution curve in which the x-axis represents particle size and the y-axis represents volume %. Based on the particle size distribution, the particle diameter exhibiting the highest volume %, i.e., the maximum peak, in the particle size range of 20 µm or less is defined as the modal particle diameter (D_{B}).

In some embodiments, the single-particle active material may satisfy Equation 1-1 below. [Equation 1-1] $1.9 \leq {D}_{B} - {D}_{A} \leq 2.6$

In Equation 1-1, the average particle diameter (D₄) and the modal particle diameter (D_{B}) are as described above.

As used herein, the term "single particle" refers, for example, to the exclusion of secondary particles formed by the agglomeration of a plurality of primary particles. For example, in particles having a single-particle form, secondary-particle structures in which 20 or more, 30 or more, 40 or more, or 50 or more primary particles are assembled or agglomerated may be excluded.

As used herein, the term "single particle" does not exclude, for example, a monolithic form observed (for example, in a scanning electron microscope (SEM) image) in which two or more but fewer than 20, or 2 to 10 single particles are attached to or closely adhered to one another.

That is, the single-particle form may refer to particles present substantially as individual particles, and may include forms in which partial contact or close contact occurs between adjacent particles during the manufacturing process. However, secondary-particle structures in which a plurality of primary particles are assembled or agglomerated to behave as a single particle are not included.

In some embodiments, the single-particle active material may have an average particle diameter (DA) of, for example, 1.2 µm to 2.4 µm, 1.4 µm to 2.2 µm, or 1.7 µm to 1.9 µm.

When the average particle diameter (D_{A}) satisfies the above-described range, both the output characteristics and high-temperature characteristics of the electrode may be improved.

In some embodiments, the single-particle active material may have a modal particle diameter (D_{B}) of, for example, 2.2 µm to 4.2 µm, 2.8 µm to 4.0 µm, or 3.4 µm to 3.8 µm.

If the modal particle diameter (D_{B}) is too large, cracks may occur in the particles during roll-pressing, which may cause unwanted side reactions within the electrode and degrade high-temperature characteristics; if it is too small, output characteristics may be degraded due to a lack of contact between the particles.

In one embodiment, the single-particle active material includes a lithium metal oxide, and the lithium metal oxide may be represented, for example, by Formula 1 below.

[Formula 1] LiₓM1ₐM2_{b}M3_{c}O_{y}

In Formula 1, M1 may be Ni, M2 may be Co, and M3 may include at least one of Mn and Al.

In Formula 1, x, y, a, b, and c may each satisfy 0 < x ≤ 1.1, 2 ≤ y ≤ 2.02, 0 ≤ a ≤ 1, 0 ≤ b ≤ 1, 0 ≤ c ≤ 1, and/or 0 < a + b + c ≤ 1.

The chemical structure represented by Formula 1 indicates a bonding relationship among elements included in the layered structure or crystal structure of the active material and does not exclude the introduction of additional elements.

For example, the single-particle active material may further include auxiliary elements to enhance the chemical stability of the active material or the layered structure/crystal structure. The auxiliary elements may be further incorporated into the layered structure/crystal structure to form bonds with the main elements, and it should be understood that this case is also included within the chemical structure range represented by Formula 1.

As a non-limiting example, the auxiliary elements may include one or more elements selected from the group consisting of, for example, Mn, Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr.

In one embodiment, the active material layer may further include at least one of a binder and a conductive material.

As a non-limiting example, the binder may include an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR). These may be used alone or in combination of two or more thereof. The binder may be used together with a thickener such as carboxymethyl cellulose (CMC).

As a non-limiting example, the conductive material may include, for example, a fibrous conductive material, a particulate conductive material, or both thereof. The fibrous conductive material may include, for example, carbon nanotubes (CNTs), and the CNTs may include single-walled carbon nanotubes (SWCNTs), double-walled carbon nanotubes (DWCNTs), multi-walled carbon nanotubes (MWCNTs), rope-shaped carbon nanotubes (rope CNTs) or the like.

The fibrous conductive material may have a length of, for example, 15 to 65 µm.

The particulate conductive material may include, for example, carbon-based conductive materials such as graphite, carbon black, and graphene; metal-based conductive materials such as tin, tin oxide, titanium oxide, LaSrCoO₃, and LaSrMnO₃; or a combination thereof.

The particulate conductive material may have a sphericity of, for example, 0.7 to 1, 0.8 to 1, or 0.9 to 1.

In some embodiments, the electrode may further include a current collector, and the active material layer may be located on one or both surfaces of the current collector.

In some embodiments, the active material layer may include the single-particle active material alone as the active material. That is, the active material within the active material layer may be composed only of the single-particle active material. Accordingly, the electrode including the active material layer may improve both output characteristics and high-temperature stability.

In one embodiment, the active material layer may include the active material in an amount of 90% by weight ("wt%") to 98 wt%, 92 wt% to 97 wt%, or 92 wt% to 96 wt% based on the total weight of the active material layer.

In one embodiment, the active material layer may include the binder in an amount of, for example, 0.5 wt% to 4.0 wt%, 0.5 wt% to 3.0 wt%, or 1.0 wt% to 1.5 wt% based on the total weight of the active material layer. When the binder is included within the above-described range, the adhesion of the active material layer to the current collector may be further improved.

In one embodiment, the active material layer may include the conductive material in an amount of, for example, 0.5 wt% to 7.0 wt%, 0.5 wt% to 5.0 wt%, or 1.0 wt% to 2.5 wt% based on the total weight of the active material layer. When the conductive material is included within the above-described range, the electrical conductivity of the active material layer may be further improved.

In some embodiments, the electrode may have an electrode density of, for example, 3.0 g/cc to 3.9 g/cc, 3.2 g/cc to 3.8 g/cc, or 3.5 g/cc to 3.7 g/cc. The electrode density may be defined as the mass per unit volume of the active material layer. The electrode density may be calculated based on mass per unit area and a thickness of the active material layer after measuring these values. By having the electrode density within the above-described range, the storage characteristics of the electrode may be further improved.

In some embodiments, the electrode may be a cathode.

In some embodiments, the active material layer may have a thickness of, for example, 125 µm to 160 µm, or 130 µm to 140 µm.

As a non-limiting example, the current collector may include a metal foil, a metal plate or the like. The metal foil or the metal plate may include, for example, metals such as stainless steel, iron, aluminum, copper, germanium, nickel, titanium, magnesium, or alloys of two or more thereof.

The current collector may have a thickness of, for example, 10 µm to 30 µm, or 10 µm to 20 µm.

In some embodiments, the current collector may be a cathode current collector.

### <Lithium Secondary Battery>

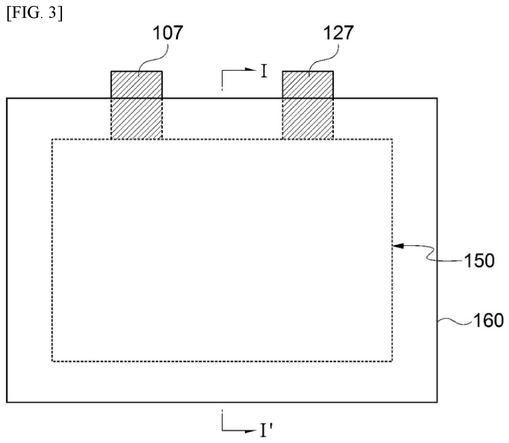

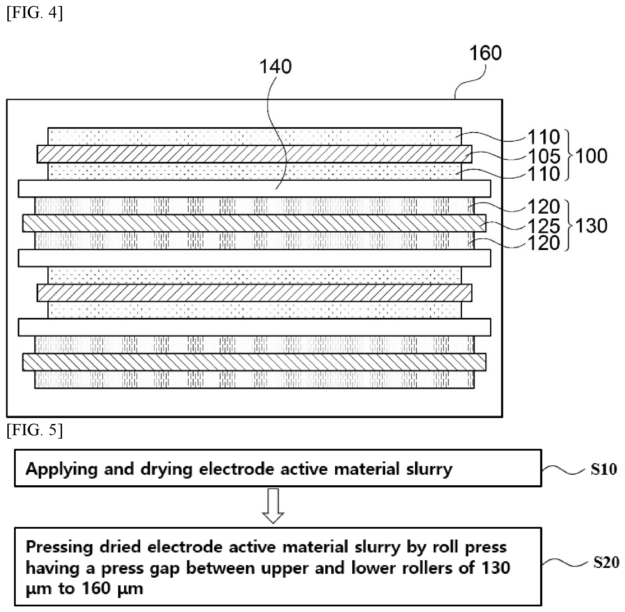

FIG. 3 is a schematic plan view of a lithium secondary battery according to exemplary embodiments, and FIG. 4 is a schematic cross-sectional view of the lithium secondary battery according to exemplary embodiments taken along line I-I' of FIG. 3. FIG. 4 is a cross-sectional view taken along line I-I' of FIG. 3 in a thickness direction.

A lithium secondary battery according to exemplary embodiments includes a cathode 100 and an anode 130 located opposite the cathode 100. The cathode 100 is the electrode for a lithium secondary battery according to exemplary embodiments, and includes an active material layer including the above-described single-particle active material. The active material layer may be a cathode active material layer 110.

The anode 130 may include an anode current collector 125 and an anode active material layer 120 located on one or both surfaces of the anode current collector 125.

The anode current collector 125 may include, for example, copper foil, nickel foil, stainless steel foil, titanium foil, nickel foam, copper foam, or a polymer substrate coated with a conductive metal. The anode current collector 125 may have a thickness of, for example, 10 µm to 50 µm.

The anode active material layer 120 may include an anode active material. The anode active material may include, for example, carbon-based materials such as crystalline carbon, amorphous carbon, carbon composites, or carbon fibers, etc.; lithium metal; a lithium alloy; a silicon (Si)-containing material, or a tin (Sn)-containing material. These may be used alone or in combination of two or more thereof.

The amorphous carbon may include hard carbon, soft carbon, coke, mesocarbon microbead (MCMB), mesophase pitch-based carbon fiber (MPCF) or the like.

The crystalline carbon may include graphite-based carbon such as natural graphite, artificial graphite, graphitized coke, graphitized MCMB, graphitized MPCF or the like.

The lithium metal may include pure lithium metal and/or lithium metal having a protective layer formed thereon for suppressing dendrite growth and the like.

Elements contained in the lithium alloy may include aluminum, zinc, bismuth, cadmium, antimony, silicon, lead, tin, gallium, indium, etc. These may be used alone or in combination of two or more thereof.

The silicon-containing material may include Si, SiOₓ (0<x<2), metal-doped SiOₓ (0<x<2), or a silicon-carbon composite, etc.

The metal may include lithium and/or magnesium, and the metal-doped SiOₓ (0<x<2) may include a metal silicate.

In exemplary embodiments, a separator 140 may be interposed between the cathode 100 and the anode 130. The separator 140 may be configured to prevent an electrical short-circuit between the cathode 100 and the anode 130, and to allow the flow of ions. For example, the separator may have a thickness of 10 µm to 20 µm.

For example, the separator 140 may include a porous polymer film or a porous nonwoven fabric.

The porous polymer film may include a polyolefin-based polymer such as an ethylene polymer, a propylene polymer, an ethylene/butene copolymer, an ethylene/hexene copolymer, or an ethylene/methacrylate copolymer, etc. These may be used alone or in combination of two or more thereof.

The porous nonwoven fabric may include glass fibers having a high melting point, polyethylene terephthalate fibers, etc.

The separator 140 may also include a ceramic-based material. For example, inorganic particles may be coated on the polymer film or dispersed within the polymer film to improve heat resistance.

The separator 140 may have a single-layer or multilayer structure including the above-described polymer film and/or non-woven fabric.

According to exemplary embodiments, an electrode cell may be defined by the cathode 100, the anode 130 and the separator 140, and a plurality of electrode cells may be stacked to form, for example, a jelly roll type electrode assembly 150. For example, the electrode assembly 150 may be formed by winding, stacking, z-folding, or stack-folding the separator 140.

The electrode assembly 150 may be accommodated in a case 160 together with the electrolyte to define a lithium secondary battery. According to exemplary embodiments, a non-aqueous electrolyte may be used as the electrolyte.

The non-aqueous electrolyte may include a lithium salt as an electrolyte and an organic solvent, the lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the like may be exemplified.

The organic solvent may include, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, γ-butyrolactone, propylene sulfite and the like. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode 100 and the anode 130 in place of the above-described separator 140.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in combination of two or more thereof.

In one embodiment, the solid electrolyte may include an oxide-based amorphous solid electrolyte, such as, for example, L1₂O-B₂O₃-P₂O₅, Li₂O-SiO₂, Li₂O-B₂O₃, Li₂O-B₂O₃-ZnO, etc.

As shown in FIGS. 3 and 4, electrode tabs (cathode tabs and anode tabs) may protrude from the cathode current collector 105 and the anode current collector 125, respectively, which belong to respective electrode cells, and may extend to one side of the case 160. The electrode tabs may be welded together with the one side of the case 160 to form electrode leads (a cathode lead 107 and an anode lead 127) that extend or are exposed to the outside of the case 160.

The lithium secondary battery may be manufactured, for example, in a cylindrical, prismatic, pouch, or coin type using a can.

### <Method for Preparing electrode for Lithium Secondary Battery>

FIG. 5 is a schematic process flowchart for describing a method for preparing an electrode for a lithium secondary battery according to exemplary embodiments.

The preparation method includes applying and drying an electrode active material slurry (S10); and pressing the dried electrode active material slurry by a roll press to form an active material layer including a single-particle active material (S20). A press gap between an upper roller and a lower roller of the roll press is 130 µm to 160 µm. In the preparation method, the active material layer may be formed such that the single-particle active material satisfies Equation 1 described above.

In some embodiments, the press gap between the upper roller and the lower roller of the roll press may be, for example, 135 µm to 158 µm, 140 µm to 145 µm, or 141 µm to 143 µm.

The electrode for a lithium secondary battery according to exemplary embodiments may be prepared by the preparation method.

The roll press includes an upper roller and a lower roller, and the gap between the upper roller and the lower roller may be controlled.

The roll press may use, for example, a heated rolling press, an electric vertical rolling press, a hydraulic rolling press, a manual vertical rolling press or the like.

In some embodiments, the preparation method may further include preparing an electrode active material slurry.

The electrode active material slurry may include a preliminary active material, and the preliminary active material may have a single-particle form.

In some embodiments, the preliminary active material may have a single-particle form, and may have a specific surface area (BET) of, for example, 0.7 m²/g to 1.0 m²/g, and a median particle diameter (D₅₀) of, for example, 3.5 µm to 4.0 µm.

The electrode active material slurry may further include at least one selected from the group consisting of, for example, a binder, a conductive material, and a solvent. The preliminary active material may include a lithium metal oxide, and the lithium metal oxide, the binder, and the conductive material may be as described above herein. The electrode active material slurry may further include additives such as a dispersant, a thickener or the like.

The solvent may include, for example, N-methyl-2-pyrrolidone (NMP), dimethylformamide, dimethylacetamide, N,N-dimethylaminopropylamine, tetrahydrofuran or the like.

In one embodiment, the electrode active material slurry may be prepared by mixing a preliminary active material, a binder, a conductive material, and a solvent. The mixing may be performed by a milling method, for example, a ball mill, a bead mill, or a basket mill.

For example, the content of the preliminary active material may be 90 wt% to 98 wt%, 92 wt% to 97 wt%, or 92 wt% to 96 wt% based on the total weight of solids in the electrode active material slurry.

For example, the content of the binder may be 0.5 wt% to 4.0 wt%, 0.5 wt% to 3.0 wt%, or 1.0 wt% to 1.5 wt% based on the total weight of solids in the electrode active material slurry.

For example, the content of the conductive material may be 0.5 wt% to 7.0 wt%, 0.5 wt% to 5.0 wt%, or 1.0 wt% to 2.5 wt% based on the total weight of solids in the electrode active material slurry.

In some embodiments, the solid content of the electrode active material slurry may be 70 wt% to 80 wt%.

When the content of each component in the electrode active material slurry is prepared within the above range, the slurry may be pressed uniformly throughout during pressing by a roll press.

As a non-limiting example, the application of the electrode active material slurry may be performed using methods such as gravure coating, slot die coating, simultaneous multilayer die coating, imprinting, doctor blade coating, dip coating, bar coating, or casting.

In some embodiments, the electrode active material slurry may be applied to one or both surfaces of the current collector with a loading amount of 15 mg/cm² to 30 mg/cm² and dried.

In some embodiments, the loading amount of the electrode may be, for example, 15 mg/cm² to 30 mg/cm², 20 mg/cm² to 25 mg/cm², or 22 mg/cm² to 24 mg/cm². The loading amount is a value representing the mass of the active material per unit area of the active material layer. By having a loading amount within the above-described range, the storage characteristics of the electrode at high temperatures may be further improved.

In one embodiment, the dried electrode active material slurry may be pressed by a roll press, for example, at room temperature.

In one embodiment, the pressing by the roll press may be performed one time or two or more times, for example, one, two, or three times.

In some embodiments, the dried electrode active material slurry may be pressed by a roll press one time or two or more times such that the prepared electrode has an electrode density of, for example, 3.0 g/cc to 3.9 g/cc, 3.2 g/cc to 3.8 g/cc, or 3.5 g/cc to 3.7 g/cc. The pressing by the roll press may be performed one time or two or more times until the prepared electrode has an electrode density within the above-described range.

By forming the electrode to have a density within the above-described range, further improved storage characteristics may be achieved.

By controlling the composition within the electrode active material slurry, the loading amount, the press gap between the upper roller and the lower roller of the roll press, and the electrode density described above, an electrode for a lithium secondary battery satisfying Equation 1 described above may be prepared.

The invention is also defined by the following aspects:
Aspect 1. An electrode for a lithium secondary battery comprising:
   an active material layer comprising an active material in the form of single particles ("single-particle active material"),
   wherein the single-particle active material satisfies Equation 1 below: [Equation 1] $0.8 \leq {D}_{B} - {D}_{A} \leq 2.6$
   wherein in Equation 1, D_{A} denotes the average particle diameter of the single-particle active material measured from a scanning electron microscope (SEM) image, wherein the average particle diameter is the average value of the maximum diameters passing through centers of the active materials in the SEM image that are 0.5 µm or more, and D_{B} denotes the modal particle diameter of the single-particle active material measured from a particle size distribution (PSD) in which an x-axis represents particle size and a y-axis represents volume %, wherein the modal particle diameter is the particle diameter that exhibits a maximum peak in a particle size range of 20 µm or less.
Aspect 2. The electrode for a lithium secondary battery according to aspect 1, wherein the average particle diameter (D_{A}) and the modal particle diameter (D_{B}) in Equation 1 are based on values measured from the active materials included in the active material layer of the electrode prepared by a press process or a roll-pressing process.
Aspect 3. The electrode for a lithium secondary battery according to aspect 2, wherein the average particle diameter (D_{A}) is measured from a scanning electron microscope (SEM) image taken of the cross-section after vertically cutting the active material layer, and the modal particle diameter (D_{B}) is measured from a particle size distribution of the active materials obtained by immersing the active material layer in an organic solvent to obtain an organic solvent in which the active materials are dispersed, followed by extraction and drying.
Aspect 4. The electrode for a lithium secondary battery according to any one of aspect 1 to 3, wherein the average particle diameter (D_{A}) of the single-particle active material is 1.2 µm to 2.4 µm.
Aspect 5. The electrode for a lithium secondary battery according to any one of aspect 1 to 4, wherein the modal particle diameter (D_{B}) of the single-particle active material is 2.2 µm to 4.2 µm.
Aspect 6. The electrode for a lithium secondary battery according to any one of aspect 1 to 5, wherein the active material included in the active material layer is composed only of the single-particle active material.
Aspect 7. The electrode for a lithium secondary battery according to any one of aspect 1 to 6, wherein the electrode has an electrode density of 3.0 g/cc to 3.9 g/cc.
Aspect 8. The electrode for a lithium secondary battery according to aspect 7, wherein the electrode has an electrode density of 3.5 g/cc to 3.7 g/cc.
Aspect 9. The electrode for a lithium secondary battery according to any one of aspect 1 to 8, further comprising a current collector, wherein the active material layer is located on one or both surfaces of the current collector.
Aspect 10. The electrode for a lithium secondary battery according to any one of aspect 1 to 9, wherein the active material layer has a thickness of 125 µm to 160 µm.
Aspect 11 The electrode for a lithium secondary battery according to any one of aspect 1 to 10, wherein the electrode is a cathode.
Aspect 12. A lithium secondary battery comprising:
   a cathode, and an anode located opposite the cathode, wherein the cathode is the electrode for a lithium secondary battery according to any one of aspect 1 to 11.
Aspect 13. A method for preparing an electrode for a lithium secondary battery comprising:
   applying and drying an electrode active material slurry; and
   pressing the dried electrode active material slurry by a roll press to form an active material layer including a single-particle active material,
   wherein a press gap between an upper roller and a lower roller of the roll press is 130 µm to 160 µm, and
   the single-particle active material included in the active material layer satisfies Equation 1 below: [Equation 1] $0.8 \leq {D}_{B} - {D}_{A} \leq 2.6$
   wherein in Equation 1, D_{A} denotes the average particle diameter of the single-particle active material measured from a scanning electron microscope (SEM) image, wherein the average particle diameter is the average value of the maximum diameters passing through centers of the active materials in the SEM image that are 0.5 µm or more, and D_{B} denotes the modal particle diameter of the single-particle active material measured from a particle size distribution (PSD) in which an x-axis represents particle size and a y-axis represents volume %, wherein the modal particle diameter is the particle diameter that exhibits a maximum peak in a particle size range of 20 µm or less.
Aspect 14. The method for preparing an electrode for a lithium secondary battery according to aspect 13, wherein the electrode active material slurry is applied to one or both surfaces of a current collector with a loading amount of 15 mg/cm² to 30 mg/cm² and dried. Aspect 15. The method for preparing an electrode for a lithium secondary battery according to aspect 13 or 14, wherein the press gap between the upper roller and the lower roller of the roll press is 135 µm to 158 µm.

Hereinafter, the embodiments of the present disclosure will be further described with reference to specific experimental examples. The examples and comparative examples included in the experimental examples are merely illustrative of the present disclosure and do not limit the scope of the appended claims.

### Examples and Comparative Examples

### Preparation of Electrode Active Material Slurry

LiNi_{0.8}Co_{0.1}Mn_{0.1}O₂ was used as a single-particle preliminary active material in each of Examples 1 to 4 and Comparative Examples 1 to 4, and its particle diameter and specific surface area are as listed in Table 1 below. Table 1 also includes information on the preliminary active material of a reference cell prepared exclusively for the evaluation of output characteristics in Experimental Example 4 described below.

Dmin (µm), Dmax (µm), D10, D50, and D90 shown in Table 1 were determined based on a laser diffraction method, and more specifically were calculated from a particle size distribution measured using a laser diffraction particle size analyzer (Malvern Mastersizer 3000) under conditions of a refractive index of 1.741, an absorption index of 1.0, and distilled water as a solvent.

Dmin denotes the minimum particle diameter among the measured particles, Dmax denotes the maximum particle diameter among the measured particles, D10 denotes a particle diameter corresponding to a cumulative volume fraction of 10%, D50 denotes a particle diameter corresponding to a cumulative volume fraction of 50%, and D90 denotes a particle diameter corresponding to a cumulative volume fraction of 90%.

The specific surface area listed in Table 1 was calculated based on the amount of nitrogen gas adsorbed at a liquid nitrogen temperature (77 K) using a TriStar 3020 analyzer, and then measured according to the Brunauer-Emmett-Teller (BET) method.

**[TABLE 1]**

| | Preliminary active material | | | | | |
|---|---|---|---|---|---|---|
| | Dₘᵢₙ (µm) | Dₘₐₓ (µm) | D₁₀ (µm) | D₅₀ (µm) | D₉₀ (µm) | Specific surface area (m²/g) |
| Example 1 | 0.4 | 9.8 | 1.9 | 3.6 | 6.2 | 0.83 |
| Example 2 | 0.4 | 9.8 | 1.9 | 3.6 | 6.2 | 0.83 |
| Example 3 | 0.4 | 9.8 | 1.9 | 3.6 | 6.2 | 0.83 |
| Example 4 | 0.3 | 10.6 | 1.7 | 3.6 | 6.5 | 1.12 |
| Comparative Example 1 | 0.4 | 9.8 | 2.1 | 3.8 | 6.3 | 0.80 |
| Comparative Example 2 | 0.4 | 9.8 | 1.9 | 3.6 | 6.2 | 0.83 |
| Comparative Example 3 | 0.4 | 9.8 | 1.9 | 3.6 | 6.2 | 0.83 |
| Comparative Example 4 | 0.4 | 9.8 | 1.9 | 3.6 | 6.2 | 0.83 |
| preliminary active material for a reference cell | 1.0 | 20.2 | 3.1 | 9.3 | 15.7 | 0.70 |

Cathode slurries were respectively prepared by mixing the single-particle preliminary active material, carbon black as a conductive material, and polyvinylidene fluoride (PVDF) as a binder in a weight ratio of 92:5:3.

### Preparation of Electrode

A cathode was prepared as follows using each cathode slurry according to the above-described examples and comparative examples, and a lithium secondary battery including the cathode was manufactured.

The cathode slurry was uniformly applied to an aluminum foil (thickness: 12 µm) having a protrusion part (a cathode tab) on one side, excluding the protrusion part, and then dried and roll-pressed to prepare a cathode. In this case, the press gap between the upper roller and the lower roller of the roll press during roll-pressing, the loading amount of the cathode active material layer within the cathode after roll-pressing, and the electrode density are listed in Table 2 below.

An anode slurry was prepared by mixing a mixture of artificial graphite and natural graphite (7:3 weight ratio) as an anode active material, styrene-butadiene rubber as a binder, and carboxymethyl cellulose as a thickener in a weight ratio of 97:1:2. The anode slurry was uniformly applied onto a copper foil (thickness: 15 µm) having a protrusion part (an anode tab) on one side, excluding the protrusion part, and then dried and roll-pressed to 1.4 g/cc to prepare an anode.

The cathode and anode were notched into a rectangular shape including a tab lead portion, and a polyethylene separator (thickness: 20 µm) was interposed between the cathode and the anode to form an electrode assembly. Subsequently, a cathode lead and an anode lead were welded and connected to the cathode tab and the anode tab, respectively. The electrode assembly was placed in a pouch (case) so that some regions of the cathode lead and anode lead were exposed to the outside, and three sides of the pouch were sealed, leaving one side as an electrolyte solution injection region. After injecting an electrolyte solution, the remaining side as the electrolyte solution injection region was also sealed, followed by impregnation for 12 hours to manufacture a secondary battery. A solution, prepared by dissolving a 1M LiPF₆ solution (using a mixed solvent of EC/EMC/DEC in a volume ratio of 25:30:45), and further adding and mixing 1 wt% of fluoroethylene carbonate (FEC), 0.3 wt% of vinylene carbonate (VC), 1.0 wt% of LiPO₂F₂ (lithium difluorophosphate), 0.5 wt% of 1,3-propane sultone (PS), and 0.5 wt% of prop-1-ene-1,3-sultone (PRS) based on the total weight of the electrolyte solution, was used as the electrolyte solution.

Meanwhile, for the evaluation of output characteristics in Experimental Example 4 described below, a cathode for a reference cell and a lithium secondary battery including the same were prepared in the same manner as described above, using a cathode slurry including the preliminary active material of the reference cell.

### Experimental Example

### Experimental Example 1: Average Particle Diameter (D_{A}) of Active Material

The cathodes of the above-described examples and comparative examples were each cut vertically in the thickness direction. For a cross-section of each active material layer with dimensions of 1 mm × 1 mm in width (x) and length (y), a scanning electron microscope (SEM) (Hitachi, S-4800) was used to take SEM cross-sectional images at a magnification of 5000x. There were a total of 100 active materials in the SEM cross-sectional images.

Using image processing software (Image-J), maximum diameters were calculated for the cross-sections of all active materials present in the SEM cross-sectional images. The maximum diameter is the length of the longest straight line among the diameters passing through the center of each active material, that is, the straight line extending from the center of each active material to the outermost edge. The average of the values of the obtained maximum diameters that are 0.5 µm or more was defined as the average particle diameter (DA).

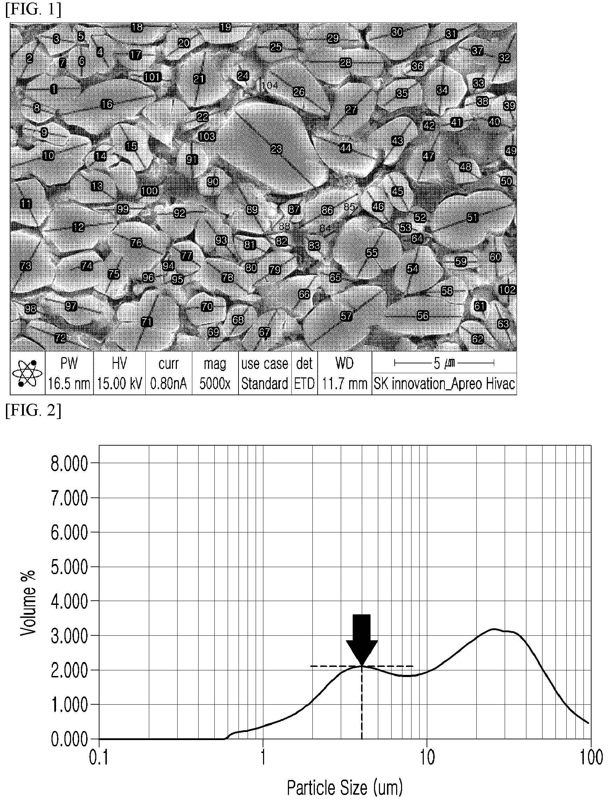

The results are listed in Table 2 below. In addition, the SEM image of the cross-section of the active material layer of the electrode prepared in Example 1 is shown in FIG. 1.

### Experimental Example 2: Modal Particle Diameter (D_{B}) of Active Material

The cathodes of the above-described examples and comparative examples were prepared as specimens each having a predetermined size, for example, with dimensions of 1 mm × 1 mm × 150 µm in width (x), length (y), and thickness (z). The specimens were immersed in N-methyl-2-pyrrolidone (NMP) to be completely submerged, and sonication was performed for 2 hours or more under room temperature conditions. The solids of the active material layer were scraped off and separated from the sonicated specimen, and the separated solids were immersed in NMP to be completely submerged. Sonication was performed again at room temperature for 2 hours or more to obtain a dispersion. The active materials were extracted from the dispersion by filtration and dried in a vacuum oven for 24 hours to obtain active materials from which the solvent had been removed. Based on the laser diffraction method, the particle diameter of the obtained active materials was measured using a laser diffraction particle size measuring device (Malvern Mastersizer3000) under conditions of refractive index: 1.741, absorption index: 1, and solvent: distilled water.

From this measurement, a particle size distribution curve in which the x-axis represents particle size and the y-axis represents volume % was obtained.

Based on the particle size distribution curve, the particle diameter exhibiting the highest volume % in the particle size range of 20 µm or less was defined as the modal particle diameter (D_{B}).

From this measurement, the difference (D_{B}-D_{A}) between the modal particle diameter (D_{B}) and the average particle diameter (D_{A}) was calculated.

The results are listed in Table 2 below. In addition, the particle size distribution of the active materials included in the active material layer of the electrode prepared in Example 1 is shown in FIG. 2.

### Experimental Example 3: Electrode Loading Amount and Electrode Density

For the cathodes of the above-described examples and comparative examples, the mass of the active material layer per unit area was measured using an electronic balance, and the thickness of the active material layer was measured using a micrometer; based on these measurements, the mass per unit volume was calculated.

### Experimental Example 4: Evaluation of Output Characteristics

The lithium secondary batteries according to the examples and comparative examples were charged and discharged three times under CC/CV (0.5C-0.05C) conditions in the range of 2.5 V to 4.35 V at 25°C, and the SOC was set to 50% based on the second discharge capacity. For a cell set to SOC 50%, the voltage before discharging (V₀) and the voltage after discharging with a current of 1C for 10 seconds (V₁) were measured, and the DCR (DC internal resistance) was calculated according to Equation 2 below. [Equation 2] $DCR = \left({V}_{0}-{V}_{1}\right) / I$

In Equation 2, I denotes a 1C discharge current (Ampere).

In addition, the output characteristics may be evaluated based on an inverse of the DCR, and a lower DCR may indicate superior output characteristics. Specifically, the output characteristics of the examples and comparative examples were evaluated as relative values (%) according to Equation 3 below. [Equation 3] $Output characteristics \left(%\right) = \left(DCR of reference cell/DCR of each cell\right) \times 100$

A higher value of the output characteristics according to Equation 3 indicates superior output characteristics.

The results are listed in Table 2 below.

### Experimental Example 5: Evaluation of Storage Characteristics

The lithium secondary batteries according to the examples and comparative examples were charged and discharged three times under CC/CV (0.5C-0.05C) conditions in the range of 2.5 V to 4.35 V at 25°C, and then finally charged to 4.35 V under the same conditions (CC/CV, 0.5C-0.05C).

For the fully charged cells, the discharge capacity (C₁) was measured by discharging them to 2.5 V at a 0.5C-rate at 25°C.

Subsequently, the cells were stored in a storage chamber at 60°C for 4 weeks, and after storage ended, the discharge capacity (C₂) was measured by discharging them to 2.5 V at 25°C.

The storage characteristics were calculated according to Equation 3 below based on the discharge capacity before and after high-temperature storage. [Equation 3] $Storage characteristics \left(%\right) = \left({C}_{2}/{C}_{1}\right) \times 100$

The results are listed in Table 2 below.

**[TABLE 2]**

| | Electro de loading amount (mg/cm ²) | Pres s gap (µm ) | Electro de density (g/cc) | Averag e particle diamet er (D_{A}) | Modal particle diamet er (D_{B}) | D_{B} D_{A} | Output characteristi cs | Storage characteristi cs |
|---|---|---|---|---|---|---|---|---|
| Example 1 | 23.4 | 142 | 3.6 | 1.8 | 3.7 | 1.9 | 98% | 97% |
| Example 2 | 23.4 | 135 | 3.8 | 1.8 | 2.6 | 0.8 | 98% | 88% |
| Example 3 | 23.4 | 158 | 3.2 | 1.8 | 4.4 | 2.6 | 88% | 97% |
| Example 4 | 23.4 | 142 | 3.6 | 1.4 | 3.5 | 2.1 | 98% | 83% |
| Comparati ve Example 1 | 23.4 | 129 | 4.0 | 1.9 | 2.2 | 0.3 | 98% | 79% |
| Comparati ve Example 2 | 23.4 | 168 | 3.0 | 1.8 | 2.4 | 0.6 | 98% | 82% |
| Comparati ve Example 3 | 23.4 | 179 | 2.8 | 1.8 | 4.6 | 2.8 | 86% | 96% |
| Comparati ve Example 4 | 23.4 | 192 | 2.6 | 1.8 | 4.8 | 3 | 75% | 97% |

Referring to Table 2, the lithium secondary batteries according to the examples had cathode active materials within the cathode satisfying 0.8≤D_{B}-D_{A}≤2.6, which improved the network formation between single-particle active materials, and consequently increased output characteristics and storage characteristics. In the lithium secondary battery of Example 1, the single-particle active materials were not broken or agglomerated after the electrode pressing process, thus maintaining the single-particle form more stably; consequently, even though the cathode active material layer included only single-particle active materials, both output characteristics and storage characteristics significantly exceeded 90%.

The lithium secondary batteries according to the comparative examples included electrodes using single-particle active materials, but were not controlled to satisfy 0.8≤D_{B}-D_{A}≤2.6. That is, the cathode active materials in the cathode of the lithium secondary batteries according to the comparative examples fell outside the numerical range of 0.8≤D_{B}-D_{A}≤2.6, and it was confirmed that the size or shape of the active material included in the electrode active material slurry was deformed during the manufacturing process of the electrode including the press process.

As a result, at least one of the output characteristics and storage characteristics of the lithium secondary batteries of the comparative examples was significantly degraded. Specifically, in the electrodes of the comparative examples to which a single-particle active material was applied, when the electrode density was high, the porosity within the electrode decreased, reducing electrolyte permeability, and thus the capacity retention during high-temperature storage was significantly reduced; and when the electrode density was low, the output characteristics were degraded due to increased inter-particle contact resistance and reduced reaction area.

## Claims

1. An electrode for a lithium secondary battery comprising:
an active material layer comprising an active material in the form of single particles ("single-particle active material"),
wherein the single-particle active material satisfies Equation 1 below: [Equation 1] $0.8 \leq {D}_{B} - {D}_{A} \leq 2.6$
wherein in Equation 1, D_{A} denotes the average particle diameter of the single-particle active material measured from a scanning electron microscope (SEM) image, wherein the average particle diameter is the average value of the maximum diameters passing through centers of the active materials in the SEM image that are 0.5 µm or more, and D_{B} denotes the modal particle diameter of the single-particle active material measured from a particle size distribution (PSD) in which an x-axis represents particle size and a y-axis represents volume %, wherein the modal particle diameter is the particle diameter that exhibits a maximum peak in a particle size range of 20 µm or less.

2. The electrode for a lithium secondary battery according to claim 1, wherein the average particle diameter (D_{A}) and the modal particle diameter (D_{B}) in Equation 1 are based on values measured from the active materials included in the active material layer of the electrode prepared by a press process or a roll-pressing process.

3. The electrode for a lithium secondary battery according to claim 2, wherein the average particle diameter (D_{A}) is measured from a scanning electron microscope (SEM) image taken of the cross-section after vertically cutting the active material layer, and the modal particle diameter (D_{B}) is measured from a particle size distribution of the active materials obtained by immersing the active material layer in an organic solvent to obtain an organic solvent in which the active materials are dispersed, followed by extraction and drying.

4. The electrode for a lithium secondary battery according to any one of claims 1 to 3, wherein the average particle diameter (D_{A}) of the single-particle active material is 1.2 µm to 2.4 µm.

5. The electrode for a lithium secondary battery according to any one of claims 1 to 4, wherein the modal particle diameter (D_{B}) of the single-particle active material is 2.2 µm to 4.2 µm.

6. The electrode for a lithium secondary battery according to any one of claims 1 to 5, wherein the active material included in the active material layer is composed only of the single-particle active material.

7. The electrode for a lithium secondary battery according to any one of claims 1 to 6, wherein the electrode has an electrode density of 3.0 g/cc to 3.9 g/cc.

8. The electrode for a lithium secondary battery according to claim 7, wherein the electrode has an electrode density of 3.5 g/cc to 3.7 g/cc.

9. The electrode for a lithium secondary battery according to any one of claims 1 to 8, further comprising a current collector,
wherein the active material layer is located on one or both surfaces of the current collector.

10. The electrode for a lithium secondary battery according to any one of claims 1 to 9, wherein the active material layer has a thickness of 125 µm to 160 µm.

11. The electrode for a lithium secondary battery according to any one of claims 1 to 10, wherein the electrode is a cathode.

12. A lithium secondary battery comprising:
a cathode(100), and
an anode(130) located opposite the cathode(100),
wherein the cathode(100) is the electrode for a lithium secondary battery according to any one of claims 1 to 11.

13. A method for preparing an electrode for a lithium secondary battery comprising:
applying and drying an electrode active material slurry; and
pressing the dried electrode active material slurry by a roll press to form an active material layer including a single-particle active material,
wherein a press gap between an upper roller and a lower roller of the roll press is 130 µm to 160 µm, and
the single-particle active material included in the active material layer satisfies Equation 1 below: [Equation 1] $0.8 \leq {D}_{B} - {D}_{A} \leq 2.6$
wherein in Equation 1, D_{A} denotes the average particle diameter of the single-particle active material measured from a scanning electron microscope (SEM) image, wherein the average particle diameter is the average value of the maximum diameters passing through centers of the active materials in the SEM image that are 0.5 µm or more, and D_{B} denotes the modal particle diameter of the single-particle active material measured from a particle size distribution (PSD) in which an x-axis represents particle size and a y-axis represents volume %, wherein the modal particle diameter is the particle diameter that exhibits a maximum peak in a particle size range of 20 µm or less.

14. The method for preparing an electrode for a lithium secondary battery according to claim 13, wherein the electrode active material slurry is applied to one or both surfaces of a current collector with a loading amount of 15 mg/cm² to 30 mg/cm² and dried.

15. The method for preparing an electrode for a lithium secondary battery according to claims 13 or 14, wherein the press gap between the upper roller and the lower roller of the roll press is 135 µm to 158 µm.
